# EUROPÄISCHE PATENTSCHRIFT

(11) **EP 2 714 300 B1**
(45) Veröffentlichungstag und Bekanntmachung des Hinweises auf die Patenterteilung: **08.09.2021**
(21) Anmeldenummer: 12711355.3
(22) Anmeldetag: 29.02.2012
(51) Int. Cl.: B21D 28/16

(54) **STANZVERFAHREN**
STAMPING METHOD
PROCÉDÉ D'ESTAMPAGE

(30) Priorität: 26.05.2011 DE 102011103295
(43) Veröffentlichungstag der Anmeldung: 09.04.2014
(73) Patentinhaber: Adient Luxembourg Holding S.à r.l., 1855 Luxembourg (LU)
(72) Erfinder: DANNHEISIG, Andreas, 48336 Sassenberg (DE); GROß, Bernd, 40764 Langenfeld (DE); KLINGSPOHN, Jutta, 85665 Moosach (DE); GOEBEL, Matthias, 51063 Köln (DE)
(74) Vertreter: Loock, Jan Pieter
(86) Internationale Anmeldenummer: PCT/EP2012/053442
(87) Internationale Veröffentlichungsnummer: WO 2012/159781

(56) Entgegenhaltungen:
- DE-A1- 4 321 477
- DE-A1- 19 801 431
- US-A1- 2002 014 291
- US-A1- 2007 095 804

## Beschreibung

Die Erfindung betrifft ein Verfahren zum Herstellen von Fahrzeugsitzkomponenten, insbesondere von Bauteilen eines Sitzverstellers durch schneidtechnische Bearbeitung eines Halbzeugs. Die Fahrzeugsitzkomponente ist insbesondere ein Bauteil für einen Sitzversteller eines Kraftfahrzeugsitzes, hergestellt mit einem durch schneidtechnische Bearbeitung erstellten Randbereich und einem durch den Randbereich begrenzten Basisabschnitt.

Aus dem Stand der Technik, beispielsweise aus der US 2002/014291 A1, ist es bekannt, Fahrzeugsitzkomponenten, insbesondere die Bauteile eines Sitzverstellers, mittels dem ein Fahrzeugsitz an die persönlichen Bedürfnisse des jeweiligen Nutzers angepasst werden kann, aus einem hochfesten Halbzeug durch Feinschneiden herauszubilden und diese in einem nachfolgenden, gesonderten Verfahrensschritt durch Einsatzhärten vollständig in einem Ofen oder durch Ultraschallerhitzung zu härten. Der Fahrzeugsitzkomponente, insbesondere ihren Funktionsabschnitten, bspw. einer Verzahnung, wird dadurch die für die Funktion erforderliche Materialeigenschaft verliehen. Insbesondere kann so bspw. eine ausreichende Härte der Verzahnung sowie eine Festigkeitserhöhung im Bereich des Zahngrunds erreicht werden.

Obgleich es für eine zuverlässige Funktion der Fahrzeugsitzkomponenten in der Regel lediglich erforderlich ist, die durch die schneidtechnische Bearbeitung ausgebildeten Randbereiche der Fahrzeugsitzkomponente einer Wärmebehandlung zu unterziehen, erfolgt bei den aus dem Stand der Technik bekannten Verfahren durchgängig eine vollständige Wärmebehandlung der schneidtechnisch hergestellten Fahrzeugsitzkomponenten. Hieraus resultieren nicht nur hohe Bearbeitungskosten. Es werden überdies die mechanischen Eigenschaften der Fahrzeugsitzkomponenten negativ beeinflusst, nachdem in den von den Randbereichen entfernten Abschnitten der Fahrzeugsitzkomponente eine hohe Duktilität gewünscht ist, damit die Fahrzeugsitzkomponente im Crashfall dazu geeignet ist, durch Verformung Crashenergie abzubauen.

Ein weiterer Nachteil der bekannten, üblicherweise durch Fineblanking, d. h. Feinschneiden der Komponenten aus einem Halbzeug hergestellten Fahrzeugsitzkomponenten besteht darin, dass deren Glattschnittanteil nicht ausreichend ist, so dass auf eine Oberflächenbearbeitung nicht verzichtet werden kann, um die gewünschten Oberflächeneigenschaften zu erreichen.

Der Erfindung liegt die Aufgabe zugrunde, ein Verfahren zum Herstellen von Fahrzeugsitzkomponenten, insbesondere von Bauteilen eines Sitzverstellers durch schneidtechnische Bearbeitung eines Halbzeugs bereitzustellen, das sich einfach und kostengünstig durchführen lässt und die Herstellung nachbearbeitungsarmer Bauteile Eine nach dem Verfahren hergestellte Fahrzeugsitzkomponente ist dazu geeignet Crashenergien durch Deformation abzubauen und weist auch eine ausreichende Verschleißfestigkeit auf.

Die Erfindung löst die Aufgabe durch ein Verfahren mit den Merkmalen des Anspruchs 1. Vorteilhafte Weiterbildungen der Erfindung sind in den abhängigen Ansprüchen angegeben.

Wesentlich für das erfindungsgemäße Verfahren zum Herstellen von Fahrzeugsitzkomponenten, insbesondere von Bauteilen eines Sitzverstellers durch schneidtechnische Bearbeitung eines Halbzeuges sind die Verfahrensschritte lokales Erwärmen des Halbzeugs im Bereich einer vorgesehenen Schnittführung der auszuschneidenden Fahrzeugsitzkomponenten und Ausschneiden der Fahrzeugsitzkomponenten aus dem Halbzeug entlang der Schnittführung während oder kurzzeitig nach dem Erwärmen.

Gemäß der Erfindung ist vorgesehen, dass das Halbzeug, aus dem die Fahrzeugsitzkomponente im Rahmen einer schneidtechnischen Bearbeitung bspw. durch Feinschneiden herausgearbeitet wird, vor dem Zuschnitt erwärmt wird, wobei die Erwärmung auf Bereiche der Schnittführung beim Zuschnitt der Fahrzeugsitzkomponente aus dem Halbzeug beschränkt ist. Die Erwärmung kann dabei auf alle Bereiche ausgedehnt werden, welche der schneidtechnischen Bearbeitung unterliegen. Es können jedoch auch selektiv nur Teilbereiche der Schnittführung erwärmt werden, so dass sich aus der Erwärmung resultierende Materialeigenschaften der sich aus der Schnittführung ergebenden Schnittkanten der Fahrzeugsitzkomponenten bereichsweise eingestellt werden können.

Die schneidtechnische Bearbeitung des Halbzeugs zur Herstellung der Fahrzeugsitzkomponenten erfolgt gemäß der Erfindung während oder kurzzeitig nach dem Erwärmungsprozess des Halbzeugs auf die gewünschte Prozesstemperatur. Neben der Verbesserung der Materialeigenschaften, insbesondere der Härte und/oder Festigkeitswerte der späteren Schnittkanten der Fahrzeugsitzkomponenten werden durch die Erwärmung die zur schneidtechnischen Bearbeitung erforderlichen Bearbeitungskräfte, bspw. Stanzkräfte in erheblichem Umfang reduziert. Darüber hinaus wird die Qualität des Schnitts gegenüber den aus dem Stand der Technik bekannten, kalt geschnittenen Halbzeugen gesteigert, was zu einem erhöhten Glattschnittanteil führt, der bis zu 100 % betragen kann.

Die erfindungsgemäße Erwärmung des Halbzeugs führt somit insgesamt zu einer Verbesserung der Produkteigenschaften der Fahrzeugsitzkomponenten, nämlich dazu, dass die ausgewählten Randbereiche die geforderte Festigkeit aufweisen und darüber hinaus der übrige, durch den Randbereich begrenzte Basisabschnitt eine ausreichende Duktilität besitzt, um im Crashfall Crashenergien durch Verformung abzubauen. Darüber hinaus erleichtert die Erwärmung den Herstellungsprozess der Fahrzeugsitzkomponenten, wobei zur Durchführung des Verfahrens weniger Energie aufgewendet werden muss. Auch kann durch eine geeignete Erwärmung des Halbzeugs auf spätere Wärmebehandlungen und/oder Oberflächenbehandlungen der Fahrzeugsitzkomponenten verzichtet werden, was zu einer ergänzenden Reduzierung der Herstellungskosten beiträgt.

Zur weiteren Verbesserung der Materialeigenschaften der Fahrzeugsitzkomponenten ist nach einer weiteren Ausgestaltung der Erfindung vorgesehen, dass die Fahrzeugsitzkomponenten im Anschluss an ihren Zuschnitt partiell, insbesondere im Bereich ihrer Schnittkanten oder vollständig erwärmt werden. Durch diese Ausgestaltung der Erfindung, die grundsätzlich eine frei wählbare Erwärmung der ausgeschnittenen Fahrzeugsitzkomponente vorsieht, können einzelne Bereiche in ihrer Materialeigenschaft in der geforderten Weise eingestellt werden. Auch kann die gesamte Fahrzeugsitzkomponente entlang ihrer Schnittkante durch die kontrollierte Erwärmung in ihrer Eigenschaft an die Anforderungen angepasst werden, wobei unterschiedliche Bereiche der Schnittkanten durch unterschiedliche Erwärmungen unterschiedliche Materialeigenschaften aufweisen können. Insgesamt erlaubt somit die nachfolgende Erwärmung der Schnittkanten in besonders vorteilhafter Weise die Anpassung der Fahrzeugsitzkomponente.

Die lokale Erwärmung des Halbzeugs vor der schneidtechnischen Bearbeitung, aber auch die vorteilhafterweise vorgesehene partielle oder vollständige Erwärmung der ausgeschnittenen Fahrzeugsitzkomponente kann grundsätzlich in beliebiger Weise erfolgen. So besteht bspw. die Möglichkeit, die Fahrzeugsitzkomponenten bereits in einer einer Schneidvorrichtung vorgelagerten Vorrichtung zu erwärmen, bspw. durch geeignete Öfen oder aber durch wärmeerzeugendes Stauchen. Denkbar ist auch die Verwendung eines in die Schneidvorrichtung integrierten Aufheizsystems oder eines nachgeschalteten Aufheizsystems, in dem die vorteilhafterweise vorgesehene, sich an den Zuschnitt anschließende Wärmebehandlung vorgenommen werden kann.

Nach einer besonders vorteilhaften Ausgestaltung der Erfindung ist jedoch vorgesehen, dass das lokale Erwärmen des Halbzeugs und/oder die partielle oder vollständige Erwärmung der zugeschnittenen Fahrzeugsitzkomponente durch Einwirkung einer Wärmestrahlung, insbesondere durch eine gerichtete Strahlung erreicht wird. Durch die entsprechende Erwärmung des Halbzeugs und/oder der zugeschnittenen Fahrzeugsitzkomponente lässt sich der zu erwärmende Bereich sehr genau begrenzen, so dass im Wesentlichen nur diejenigen Bereiche einer Wärmebehandlung unterliegen, in denen später eine entsprechende Härte und/oder Festigkeitserhöhung erwünscht ist.

Insbesondere durch die Verwendung einer gerichteten Strahlung lässt sich in besonderer Weise ein sehr begrenzter Wärmeeintrag erreichen, so dass die Bereiche, deren Materialeigenschaften unverändert bleiben sollen, keine Erwärmung erfahren. Die Verwendung einer hochenergetischen Strahlung ermöglicht es, den Bereich der zu härtenden Schnittkanten punktförmig oder flächig in sehr kurzer Zeit auf die zur Härtung notwendige Temperatur zu erhitzen, wobei der für die Härtung erforderliche Abkühlvorgang aufgrund der sehr schnellen Erwärmung durch die Strahlung direkt im Anschluss über die Fahrzeugsitzkomponente selbst erfolgen kann, die wegen der Trägheit der Wärmeleitung in der kurzen Zeit nicht mit erhitzt wird.

Nach einer besonders vorteilhaften Weiterbildung der Erfindung ist dabei vorgesehen, dass die partielle oder vollständige Erwärmung der zugeschnittenen Fahrzeugsitzkomponente durch eine über eine Strahlweiche, einen Spiegel und/oder eine Strahlbeugung erfolgende Umlenkung der gerichteten Strahlung erfolgt. Die Verwendung einer Strahlweiche, eines Spiegel und/oder einer Strahlbeugung ermöglicht es, einen möglicherweise bereits zur Erwärmung des Halbzeugs verwendete Strahlungsquelle in unveränderter Form auch zur partiellen oder vollständigen Erwärmung der zugeschnittenen Fahrzeugsitzkomponente zu verwenden, wobei die Steuerung und Ausrichtung der Strahlungsquelle dabei über die Strahlweiche, den Spiegel und/oder die Strahlbeugung erfolgt, bei der bspw. ein Elektronenstrahl mittels eines Magnetfelds gesteuert wird. Auf umfangreiche Steuerungsbewegungen der Strahlungsquelle kann gemäß dieser Weiterbildung der Erfindung verzichtet werden.

Wie bereits eingangs dargelegt, kann die Erwärmung des Halbzeugs und/oder der zugeschnittenen Fahrzeugsitzkomponente an beliebiger Stelle erfolgen. So besteht bspw. die Möglichkeit, das Halbzeug vor der Platzierung in einer entsprechenden Schneidvorrichtung in einer separaten Heizvorrichtung zu erwärmen. Auch im Falle einer nachfolgenden Wärmebehandlung der ausgeschnittenen Fahrzeugsitzkomponente kann diese in einer separaten Heizvorrichtung durchgeführt werden.

Nach einer vorteilhaften Weiterbildung der Erfindung ist jedoch vorgesehen, dass die Erwärmung des Halbzeuges und/oder der zugeschnittenen Fahrzeugsitzkomponente in der Schneidvorrichtung erfolgt. Gemäß dieser Weiterbildung der Erfindung ist die Schneidvorrichtung, in der die Fahrzeugsitzkomponente aus dem Halbzeug getrennt wird, derart ausgebildet, dass sie eine Erwärmung des Halbzeugs und/oder der zugeschnittenen Fahrzeugsitzkomponente innerhalb der Schneidvorrichtung ermöglicht. Die Erwärmung kann dabei direkt über die Schneidvorrichtung erfolgen, welche entsprechend ausgestaltet ist oder die Schneidvorrichtung kann derart ausgestaltet sein, dass sie für geeignete Heizvorrichtungen den Zugang zum Halbzeug und/oder zur zugeschnittenen Fahrzeugsitzkomponente ermöglicht. Im Falle der vorteilhafterweise vorgesehenen Verwendung einer gerichteten Strahlung ist die Schneidvorrichtung gemäß dieser Weiterbildung der Erfindung bspw. derart ausgebildet, dass die Strahlung unmittelbar oder über vorteilhafterweise vorgesehene Umlenkvorrichtungen auf im Wesentlichen alle Bereiche des Halbzeugs und/oder der zugeschnittenen Fahrzeugsitzkomponente geleitet werden kann.

Grundsätzlich lässt sich bereits durch eine geeignete Erwärmung eine gewünschte Materialeigenschaft der herzustellenden Fahrzeugsitzkomponenten erreichen. Nach einer besonders vorteilhaften Weiterbildung der Erfindung ist jedoch vorgesehen, dass die ausgeschnittene Fahrzeugsitzkomponente im Anschluss an den Zuschnitt aus dem Halbzeug gekühlt wird. Die Durchführung einer Kühlung, welche grundsätzlich in beliebiger Weise erfolgen kann, erlaubt es, die Härte und/oder Festigkeitswerte in besonders zuverlässiger Weise an die gewünschten Vorgaben anzupassen. Besonders vorteilhafter Weise ist dabei vorgesehen, dass die Kühlung, für die auch separate Kühleinrichtungen oder Kühlmittel verwendet werden können, durch Konvektion und/oder Wärmeleitung in die Schneidvorrichtung, insbesondere in eine Spannvorrichtung der Schneidvorrichtung erfolgt.

Gemäß dieser Weiterbildung der Erfindung kann die Schneidvorrichtung derart ausgebildet sein, dass sie zur kontrollierten Kühlung der ausgeschnittenen Fahrzeugsitzkomponente ausgebildet ist, wozu sie bspw. mit geeigneten Kühlkanälen versehen ist, die auch zum Anschluss von Kühlaggregaten ausgebildet sein können. Besonders vorteilhafter Weise ist jedoch vorgesehen, dass die Schneidvorrichtung, insbesondere eine Spannvorrichtung der Schneidvorrichtung derart ausgebildet ist, dass die Kühlung durch Konvektion und/oder Wärmeleitung in die Schneidvorrichtung erreicht wird, so dass auf separate Kühlvorrichtungen verzichtet werden kann, wodurch die Herstellungskosten in ergänzender Weise gesenkt werden können.

Wesentlich für die Fahrzeugsitzkomponente, insbesondere ein Bauteil für einen Sitzversteller eines Kraftfahrzeugsitzes, mit einem durch schneidtechnische Bearbeitung erstellten Randbereich und einem durch den Randbereich begrenzten Basisabschnitt ist, dass der Randbereich zumindest partiell eine größere Härte und/oder Festigkeit als der Basisabschnitt aufweist. Der Randbereich der Fahrzeugsitzkomponente, insbesondere des Bauteils für einen Sitzversteller wird durch den Bereich definiert, der bei der Herstellung der Fahrzeugsitzkomponente aus einem Halbzeug im Bereich der schneidtechnischen Bearbeitung liegt. Dies sind insbesondere die Umfangsflächen der Fahrzeugkomponenten, wie bspw. hierbei hergestellte Verzahnungen, aber auch Öffnungen der Fahrzeugsitzkomponenten, welche bspw. dazu dienen, diese auf einer geeigneten Welle oder Achse anzuordnen.

Diese Bereiche weisen zumindest partiell eine größere Härte und/oder Festigkeit als der Basisabschnitt auf, so dass die Fahrzeugsitzkomponente im Kontaktbereich die erforderliche Härte und/oder Festigkeit aufweist, andererseits im Bereich des Basisabschnitts eine Duktilität besitzt, welche im Crashfall den Abbau von Aufprallenergie durch Verformungsarbeit ermöglicht. Darüber hinaus weisen derartige Fahrzeugsitzkomponenten den Vorteil auf, dass für diese ein preiswertes und relativ dünnes Werkstück eingesetzt werden kann, nachdem die geforderten Härte- und Festigkeitseigenschaften in einem erforderlichen Bereich vorhanden sind.

Nach einer besonders vorteilhaften Ausgestaltung sind die Randbereiche der Fahrzeugsitzkomponenten dabei oberflächengehärtet, so dass der Basisabschnitt einen hohen Anteil an der Fahrzeugsitzkomponente besitzt und insgesamt bei ausreichender Härte und/oder Festigkeit der Randbereiche ein hohes Maß an Energieabsorptionsfähigkeit durch Deformation durch die Fahrzeugsitzkomponente bereitgestellt wird. Besonders vorteilhafterweise ist der Randbereich dabei durch eine Wärmestrahlung, insbesondere gerichtete Strahlung gehärtet, wobei derart gehärtete Randbereiche die Ausbildung eines besonders großen Basisabschnitts ermöglichen.

Ein Ausführungsbeispiel der Erfindung wird nachstehend in Bezug auf die Zeichnungen näher erläutert. In den Zeichnungen zeigen:
- Fig.1: in einer perspektivischen Ansicht ein Bauteil eines Sitzverstellers und
- Fig. 2: eine Spannungsverteilung in einer Verzahnung des Bauteils für den Sitzversteller und einem Ritzel bei einer unfallbedingten Last.

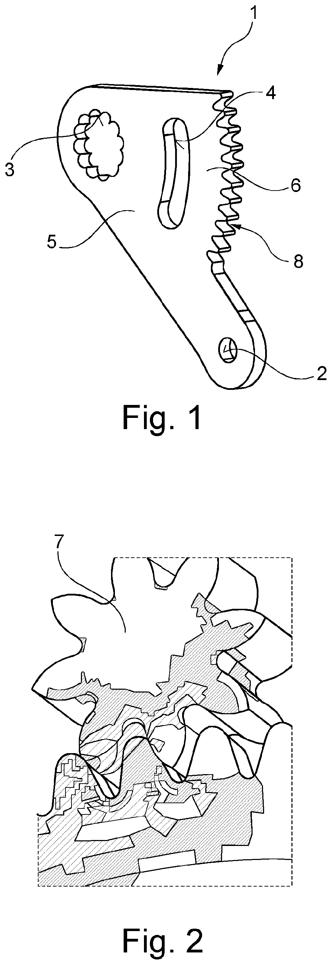

Bei dem in Fig. 1 dargestellten Bauteil 1 eines hier nicht dargestellten Sitzverstellers handelt es sich um einen Gelenkarm eines Viergelenks zur höhenverstellbaren Lagerung eines hier ebenfalls nicht dargestellten Fahrzeugsitzes an einer nicht dargestellten Sitzschiene. Das Bauteil 1 weist zwei Ausnehmungen 2, 3 auf, welche im Bereich der Drehachsen des Gelenkarms ausgeschnitten sind. Eine weitere, bogenförmig geschnittene Ausnehmung 4 dient der Durchführung von Führungsmitteln.

Der Basisabschnitt 5 des Bauteils 1 weist eine besonders hohe Duktilität auf, damit das Bauteil 1 beim Auftreffen unfallbedingter Lastspitzen ein günstiges Energieaufnahmeverhalten aufweist. An einem Teil seines gleichfalls geschnittenen Außenumfangs ist das Bauteil 1 mit einer Verzahnung 6 ausgestattet, welche mit einem in Fig. 2 dargestellten Ritzel 7 eines Höhenverstellers in Eingriff befindlich ist. Abweichend von den Anforderungen an den Basisabschnitt 5 des Bauteils 1 ist gewünscht, dass die Verzahnung 6 eine ausreichende Härte und der Zahngrund 8 eine Festigkeitserhöhung gegenüber dem Basisabschnitt 5 aufweist.

Diese Eigenschaften sind dadurch erreicht, dass das Halbzeug, aus dem das Bauteil 1 durch schneidtechnische Bearbeitung herausgebildet ist, nur örtlich entlang der vorgesehenen Schnittführung, insbesondere im Bereich der Verzahnung 6 vor dem Feinschneiden erhitzt und zeitgleich oder vorzugsweise mit geringem zeitlichen Abstand geschnitten wird. Der Basisabschnitt 5 wird von dieser Wärmebehandlung somit im Wesentlichen nicht erfasst und behält seine ursprünglichen mechanischen Eigenschaften bei.

## Patentansprüche

1. Verfahren zum Herstellen von Fahrzeugsitzkomponenten (1), insbesondere von Bauteilen eines Sitzverstellers durch schneidtechnische Bearbeitung eines Halbzeugs mit den Verfahrensschritten
- lokales Erwärmen des Halbzeugs im Bereich einer vorgesehenen Schnittführung der auszuschneidenden Fahrzeugsitzkomponenten und
- Ausschneiden der Fahrzeugsitzkomponenten (1) aus dem Halbzeug durch Feinschneiden entlang der Schnittführung während oder kurzzeitig nach dem Erwärmen.

2. Verfahren nach Anspruch 1, **dadurch gekennzeichnet, dass** die Fahrzeugsitzkomponenten (1) im Anschluss an ihren Zuschnitt partiell, insbesondere im Bereich ihrer Schnittkanten (6) oder vollständig erwärmt werden.

3. Verfahren nach Anspruch 1 oder 2, **dadurch gekennzeichnet, dass** das lokale Erwärmen des Halbzeugs und/oder die partielle oder vollständige Erwärmung der zugeschnittenen Fahrzeugsitzkomponenten (1) durch Einwirkung einer Wärmestrahlung, insbesondere durch eine gerichtete Strahlung erreicht wird.

4. Verfahren nach einem der vorhergehenden Ansprüche, **dadurch gekennzeichnet, dass** die partielle oder vollständige Erwärmung der zugeschnittenen Fahrzeugsitzkomponente (1) durch eine über eine Strahlweiche, einen Spiegel und/ oder eine Strahlbeugung erfolgende Umlenkung der gerichteten Strahlung erfolgt.

5. Verfahren nach einem der vorhergehenden Ansprüche, **dadurch gekennzeichnet, dass** die Erwärmung des Halbzeugs und/oder der zugeschnittenen Fahrzeugsitzkomponente (1) in einer Schneidvorrichtung erfolgt.

6. Verfahren nach einem der vorhergehenden Ansprüche, **dadurch gekennzeichnet, dass** die ausgeschnittene Fahrzeugsitzkomponente (1) gekühlt wird.

7. Verfahren nach einem der vorhergehenden Ansprüche, **dadurch gekennzeichnet, dass** die Kühlung der ausgeschnittenen Fahrzeugsitzkomponenten (1) durch Konvektion und/ oder Wärmeleitung in die Schneidvorrichtung, insbesondere in eine Spannvorrichtung der Schneidvorrichtung erfolgt.

## Claims

1. Method for producing vehicle seat components (1), in particular components of a seat adjuster, by processing a semi-finished product by cutting, with the method steps of
- locally heating the semi-finished product in the region of an intended cutting line of the vehicle seat components to be cut out, and
- cutting the vehicle seat components (1) out of the semi-finished product by precision cutting along the cutting line during or shortly after the heating.

2. Method according to Claim 1, **characterized in that** the vehicle seat components (1) following their cutting are heated partially, in particular in the region of their cut edges (6), or completely.

3. Method according to Claim 1 or 2, **characterized in that** the local heating of the semi-finished product and/or the partial or complete heating of the cut vehicle seat components (1) is achieved by action of thermal radiation, in particular by directed radiation.

4. Method according to one of the preceding claims, **characterized in that** the partial or complete heating of the cut vehicle seat component (1) is undertaken by a deflection of the directed radiation via a beam switch, a mirror and/or beam diffraction.

5. Method according to one of the preceding claims, **characterized in that** the heating of the semi-finished product and/or of the cut vehicle seat component (1) is undertaken in a cutting device.

6. Method according to one of the preceding claims, **characterized in that** the vehicle seat component (1) which has been cut out is cooled.

7. Method according to one of the preceding claims, **characterized in that** the cooling of the vehicle seat components (1) which have been cut out is undertaken by convection and/or heat conduction into the cutting device, in particular into a clamping device of the cutting device.

## Revendications

1. Procédé de fabrication de composants de siège de véhicule (1), en particulier de pièces d'un dispositif de réglage de siège, par usinage par une technique de découpage d'un demi-produit, comprenant les étapes de procédé consistant à
- chauffer localement le demi-produit au niveau d'un tracé de découpe prévu pour les composants de siège de véhicule à découper, et
- découper les composants de siège de véhicule (1) dans le demi-produit par découpage de précision le long du tracé de découpe pendant ou peu après le chauffage.

2. Procédé selon la revendication 1, **caractérisé en ce qu'**à la suite de leur découpe, les composants de siège de véhicule (1) sont chauffés partiellement, en particulier au niveau de leurs arêtes de coupe (6), ou complètement.

3. Procédé selon la revendication 1 ou 2, **caractérisé en ce que** le chauffage local du demi-produit et/ou le chauffage partiel ou complet des composants de siège de véhicule découpés (1) est/sont obtenu(s) par l'effet d'un rayonnement thermique, en particulier par un rayonnement orienté.

4. Procédé selon l'une quelconque des revendications précédentes, **caractérisé en ce que** le chauffage partiel ou complet du composant de siège de véhicule découpé (1) est effectué par une déflexion du rayonnement orienté, effectuée par l'intermédiaire d'un commutateur de faisceau, d'un miroir et/ou d'une diffraction de rayon.

5. Procédé selon l'une quelconque des revendications précédentes, **caractérisé en ce que** le chauffage du demi-produit et/ou du composant de siège de véhicule découpé (1) est effectué dans un dispositif de découpage.

6. Procédé selon l'une quelconque des revendications précédentes, **caractérisé en ce que** le composant de siège de véhicule découpé (1) est refroidi.

7. Procédé selon l'une quelconque des revendications précédentes, **caractérisé en ce que** le refroidissement du composant de siège de véhicule découpé (1) est effectué par convection et/ou par conduction thermique dans le dispositif de découpage, en particulier dans un dispositif de serrage du dispositif de découpage.
